# EUROPÄISCHE PATENTSCHRIFT

(11) **EP 3 815 937 B1**
(45) Veröffentlichungstag und Bekanntmachung des Hinweises auf die Patenterteilung: **10.12.2025**
(21) Anmeldenummer: 20203139.9
(22) Anmeldetag: 21.10.2020
(51) Int. Cl.: B60D 1/06, B60D 1/54

(54) **ANHÄNGEKUPPLUNG**
TRAILER COUPLING
CROCHET D'ATTELAGE

(30) Priorität: 30.10.2019 DE 102019129347
(43) Veröffentlichungstag der Anmeldung: 05.05.2021
(73) Patentinhaber: ACPS Automotive GmbH, 74379 Ingersheim (DE)
(72) Erfinder: Kadnikov, Aleksej, 71229 Leonberg (DE)
(74) Vertreter: Hoeger, Stellrecht & Partner Patentanwälte mbB

(56) Entgegenhaltungen:
- EP-A2- 2 792 514
- DE-A1- 102014 011 348
- DE-A1- 102015 109 411

## Beschreibung

Die Erfindung betrifft eine Anhängekupplung, umfassend einen zwischen einer Arbeitsstellung und einer Ruhestellung bewegbaren Kugelhals mit einem an einem ersten Ende angeordneten Schwenklagerkörper und einer an einem zweiten Ende angeordneten Kupplungskugel, eine mittels eines an einer Fahrzeugkarosserie befestigbaren Trägers fahrzeugfest angeordnete Schwenklagereinheit mit einem Schwenklagergehäuse, mittels welcher der Schwenklagerkörper um eine Schwenkachse zwischen der Arbeitsstellung und der Ruhestellung verschwenkbar gelagert ist, und eine Drehblockiereinrichtung, welche in mindestens einer Drehblockierstellung eine Schwenkbewegung des Schwenklagerkörpers um die Schwenkachse relativ zur Schwenklagereinheit blockiert und in einer Lösestellung freigibt, wobei das Schwenklagergehäuse eine Aufnahme eines Lagerteils des Trägers durchsetzt und dabei durch Formschlusselemente drehfest gehalten ist, wobei das Schwenklagergehäuse durch an dem Lagerteil anliegende und sich am Schwenklagergehäuse sowie am Lagerteil abstützende Abstützkörper fixiert ist und wobei sich die Abstützkörper beiderseits der Aufnahme an dem Lagerteil abstützen.

Derartige Anhängekupplungen sind aus der DE 2015 109 411 A1 bekannt, bei diesen besteht die Notwendigkeit, die Schwenklagereinheit möglichst einfach, stabil und zuverlässig mit dem Träger zu verbinden.

Diese Aufgabe wird bei einer Anhängekupplung der eingangs beschriebenen Art durch die Merkmale des Anspruchs 1 gelöst.

Der Vorteil der erfindungsgemäßen Lösung ist somit darin zu sehen, dass damit einerseits eine einfache Montage des Schenklagergehäuses an dem Träger möglich ist und andererseits die Verbindung zwischen dem Schwenklagergehäuse und dem Träger stabil ist, um die auf die Schwenklagereinheit in der Arbeitsstellung wirkenden Kräfte aufzunehmen und auf die Fahrzeugkarosserie zu übertragen.

Hinsichtlich der Ausbildung der Abstützkörper ist es günstig, wenn die Abstützkörper sich mit Abstützflächen außerhalb der Aufnahme an dem Lagerteil abstützen, um somit eine besonders stabile und insbesondere kippstabile Fixierung des Schwenklagergehäuses relativ zum Lagerteil zu erreichen.

Insbesondere ist es hierbei von Vorteil, wenn das Lagerteil zwischen den Abstützkörpern eingespannt ist.

Ein derartiges Einspannen des Lagerteils zwischen den Abstützkörpern ist vorteilhaft dadurch zu erreichen, dass die Abstützfläche mindestens eines der Abstützkörper relativ zum dem Schwenklagergehäuse in Richtung des anderen Abstützkörpers durch ein Verspannen bewirkende Elemente bewegbar ist.

Hinsichtlich der Ausbildung der Aufnahme des Lagerteils für das Schwenklagergehäuse wurden bislang keine näheren Angaben gemacht.

So könnte beispielsweise die Aufnahme des Lagerteils in der Form einer Gabel ausgebildet sein.

Eine besonders vorteilhafte Lösung sieht jedoch vor, dass die Aufnahme des Lagerteils durch einen Durchbruch desselben gebildet ist, so dass das Lagerteil die Aufnahme insbesondere vollständig umschließt und somit die notwendige Stabilität zur Verfügung stellt.

Erfindungsgemäß lässt sich dabei das Schwenklagergehäuse an der Aufnahme dadurch zweckmäßig fixieren, wenn das Schwenklagergehäuse einen die Aufnahme des Lagerteils durchsetzenden Fortsatz aufweist, der somit von der Aufnahme in einfacher Weise gehalten werden kann.

Hinsichtlich der Ausbildung der Formschlusselemente sind die unterschiedlichsten Möglichkeiten denkbar.

Beispielsweise könnten die Formschlusselemente Konturen sein, die durch zwischen diese einsetzbare Keilelemente drehfest relativ zueinander fixierbar sind.

Eine besonders vorteilhafte Lösung sieht jedoch vor, dass die Formschlusselemente von einer Kreiskontur abweichende komplementäre Konturen aufweisen, so dass die Konturen keilkörperfrei, das heißt ohne Verwendung eines zusätzlichen Keilkörpers, eine drehfeste Verbindung ergeben.

Insbesondere sind die Konturen von der Kreiskontur in radialer Richtung abweichende Konturen, die von der Kreiskontur radial nach innen und/oder radial nach außen abweichen.

Insbesondere ist dabei vorgesehen, dass der Durchbruch des Lagerteils einen radial zur Schwenkachse variierende Innenkontur aufweist und dass der Fortsatz eine radial zur Schwenkachse variierende Außenkontur aufweist.

Insbesondere ist es dabei günstig, wenn die radial variierende Innenkontur des Durchbruchs mit der radial variierenden Außenkontur des Fortsatzes korrespondierend ausgebildet ist, so dass dadurch möglichst exakt komplementäre Konturen vorliegen, die einerseits eine einfache Montage durch Einstecken des Fortsatzes in den Durchbruch ermöglichen und andererseits eine insbesondere drehmomentstabile Verbindung zwischen dem Lagerteil und dem Fortsatz des Schwenklagergehäuses ermöglichen.

Hinsichtlich der Ausbildung der Abstützkörper wurden bislang keine näheren Angaben gemacht.

So sieht eine vorteilhafte Lösung vor, dass einer der sich am Schwenklagergehäuse sowie am Lagerteil abstützenden Abstützkörper am Schwenklagergehäuse feststehend angeordnet ist.

Besonders einfach ist diese konstruktive Lösung dann, wenn der Abstützkörper einstückig an das Schwenklagergehäuse angeformt ist.

Im einfachsten Fall ist ein derartiger Abstützkörper ein am Schwenklagergehäuse angeordneter Flansch, der insbesondere einstückig an das Schwenklagergehäuse angeformt werden kann.

Um das Lagerteil zwischen den Abstützflächen in einfacher Weise einspannen zu können, wäre es beispielsweise denkbar, eine Abstützfläche eines der Abstützkörper relativ zu diesem Abstützkörper bewegbar auszubilden.

Eine konstruktiv besonders einfach realisierbare Lösung sieht jedoch vor, dass einer der Abstützkörper relativ zu dem Schwenklagergehäuse verstellbar ist.

Eine derartige Verstellbarkeit relativ zum Schwenklagergehäuse lässt sich in unterschiedlichster Art und Weise realisieren.

So sieht beispielsweise eine Lösung vor, dass der Abstützkörper an einer Halteaufnahme des Fortsatzes gehalten ist und durch eine Relativbewegung zur Halteaufnahme relativ zum Schwenklagergehäuse verstellbar ist.

Hierzu sind die verschiedensten Realisierungsmöglichkeiten denkbar.

Die erfindungsgemäße Lösung sieht vor, dass der Abstützkörper relativ zur Halteaufnahme durch zumindest ein am Abstützkörper angeordnetes Stützelement sowie zumindest ein mit diesem Stützelement zusammenwirkendes und an der Halteaufnahme angeordnetes Stützelement verstellbar ist, von denen mindestens eines eine in axialer Richtung des Fortsatzes variierende Stützfläche aufweist.

Das heißt, dass das in axialer Richtung variierende Stützelement entweder am Abstützkörper oder an der Halteaufnahme angeordnet ist und dass das mit diesem korrespondierende Stützelement an der Halteaufnahme oder dem Abstützkörper angeordnet ist.

Es ist denkbar, das in axialer Richtung des Fortsatzes variierende Stützelement als Kulissenbahn auszubilden, welches mit einem als Kulissenfolger ausgebildeten Stützelement zusammenwirkt, so dass eine relative Verdrehung der Stützelemente die Verstellung des Abstützkörpers relativ zur Halteaufnahme bewirkt.

Die erfindungsgemäße Lösung sieht ferner vor, dass der Abstützkörper relativ zur Halteaufnahme durch zumindest ein am Abstützkörper angeordnetes Stützelement sowie zumindest ein mit diesem Stützelement zusammenwirkendes und an der Halteaufnahme angeordnetes Stützelement verstellbar ist, von denen mindestens eines eine in radialer Richtung des Fortsatzes variierende Stützfläche aufweist.

Konkretisieren lässt sich eine derartige Lösung insbesondere dadurch, dass eines der Stützelemente eine an der Halteaufnahme ausgebildete Keilfläche und/oder das andere der Stützelemente einen radial zum Fortsatz bewegbaren Keilkörper mit einer Keilfläche aufweist.

Insbesondere lässt sich die Keilfläche dadurch realisieren, dass die Halteaufnahme als Nut ausgebildet ist und dass insbesondere mindestens eine Nutwand derselben eine derartige Keilfläche bildet.

In einem derartigen Fall verläuft die die Keilfläche tragende Nutwand vorzugsweise konisch zu der Schwenkachse und insbesondere in zunehmendem Abstand zu einer dieser Nutwand zugewandten gegenüberliegenden Nutwand der Nut.

Dabei kann das mit dieser Keilfläche zusammenwirkende Stützelement selbst nicht mit einer Keilfläche versehen sein oder ebenfalls mit einer Keilfläche versehen sein.

Ferner ist es vorteilhaft, wenn an dem Abstützkörper mehrere Stützelemente vorgesehen sind.

Das Vorsehen mehrerer Stützelemente an dem Abstützkörper hat den Vorteil, dass sich diese dann durch Relativbewegungen optimal an Toleranzen anpassen können, die zwischen den Abstützkörper, der Halteaufnahme und dem Lagerteil bestehen, um eine optimale Abstützung zu gewährleisten.

Eine vorteilhafte Lösung sieht dabei vor, dass die mehreren Stützelemente durch zwei Ringsegmente eines Halterings gebildet sind, die durch Spannvorrichtungen miteinander verspannbar sind.

Eine andere vorteilhafte Lösung sieht vor, dass mindestens drei als Segmente, insbesondere als Bogensegmente, ausgebildete Stützelemente vorgesehen sind, die durch einen Stützelemententräger beaufschlagt sind.

Ein derartiger Stützelemententräger erlaubt in optimaler Weise Relativbewegungen der Stützelemente zueinander, um - wie bereits beschrieben - Toleranzen auszugleichen.

Besonders günstig ist es, wenn der Stützelemententräger eine radiale Beaufschlagung der Stützelemente in Richtung der Halteaufnahme bewirkt.

Dabei kann der Stützelemententräger ein separates Teil sein, welches die Stützelemente trägt.

Eine andere vorteilhafte Lösung sieht vor, dass der Stützelemententräger ein Teil ist, an das die Stützelemente angeformt sind.

Besonders zweckmäßig ist es, wenn der Stützelemententräger C-förmig ausgebildet ist und wenn die offenen Enden desselben durch ein Spannelement aufeinander zu bewegt sind, um die Stützelemente in radialer Richtung auf die Halteaufnahme zu beaufschlagen.

Weitere Merkmale und Vorteile der erfindungsgemäßen Lösung sind Gegenstand der nachfolgenden Beschreibung sowie der zeichnerischen Darstellung eines Ausführungsbeispiels;

In der Zeichnung zeigen:
- Fig. 1: eine Rückansicht eines Kraftfahrzeugs mit einer erfindungsgemäßen Anhängekupplung;
- Fig. 2: eine Draufsicht auf ein erstes Ausführungsbeispiel einer nicht dem Anspruch 1 unterfallende Anhängekupplung mit Blick in Fahrtrichtung auf die an einem Fahrzeugheck montierte Anhängekupplung, wobei die Anhängekupplung in ihrer Arbeitsstellung steht;
- Fig. 3: eine Draufsicht auf die Anhängekupplung in Fig. 2 in Richtung der Schwenkachse;
- Fig. 4: eine Ansicht entsprechend Fig. 2 der in der Ruhestellung stehenden Anhängekupplung;
- Fig. 5: eine Draufsicht auf die Anhängekupplung gemäß die in der Ruhestellung stehende Anhängekupplung gemäß Fig. 4 in Richtung der Schwenkachse;
- Fig. 6: eine Darstellung eines Schnitts längs Linie 6-6 in Fig. 3;
- Fig. 7: eine perspektivische Explosionsdarstellung des ersten Ausführungsbeispiels des Schwenklagergehäuses und des Lagerteils vor einem Zusammenbau;
- Fig. 8: eine Draufsicht in Richtung des Pfeils A in Fig. 7 nach dem Zusammenbau, jedoch ohne aufgeschraubten Haltering;
- Fig. 9: einen Schnitt längs Linie 9-9 in Fig. 6 in der Arbeitsstellung;
- Fig. 10: eine Darstellung eines Schnitts ähnlich Fig. 9 in der Ruhestellung;
- Fig. 11: eine perspektivische Explosionsdarstellung ähnlich Fig. 7 eines zweiten Ausführungsbeispiels der Anhängekupplung, welches eine erfindungsgemäße Anhängekupplung darstellt;
- Fig. 12: einen vergrößerten Schnitt ähnlich Fig. 6 durch das Schwenklagergehäuse und das Lagerteil nach dem Zusammenbau;
- Fig. 13: einen Schnitt längs Linie 13-13 in Fig. 12,
- Fig. 14: eine perspektivische Darstellung des Schwenklagergehäuses und des Lagerteils gemäß Fig. 11 nach dem Zusammenbau;
- Fig. 15: eine perspektivische Explosionsdarstellung ähnlich Fig. 11 eines dritten Ausführungsbeispiels;
- Fig. 16: eine Draufsicht auf den Haltering des dritten Ausführungsbeispiels der Anhängekupplung, welches eine erfindungsgemäße Anhängekupplung darstellt;
- Fig. 17: eine perspektivische Darstellung des Halterings des dritten Ausführungsbeispiels;
- Fig. 18: eine perspektivische Explosionsdarstellung ähnlich Fig. 15 eines vierten Ausführungsbeispiels der Anhängekupplung, welche eine erfindungsgemäße Anhängekupplung darstellt;
- Fig. 19: eine Draufsicht ähnlich Fig. 16 auf den Haltering des vierten Ausführungsbeispiels;
- Fig. 20: eine perspektivische Darstellung ähnlich Fig. 17 des Halterings des vierten Ausführungsbeispiels;
- Fig. 21: einen Schnitt längs Linie 21-21 in Fig. 19;
- Fig. 22: einen Schnitt längs Linie 22-22 in Fig. 23 und
- Fig. 23: eine perspektivische Darstellung des an dem Lagerteil montierten vierten Ausführungsbeispiels.

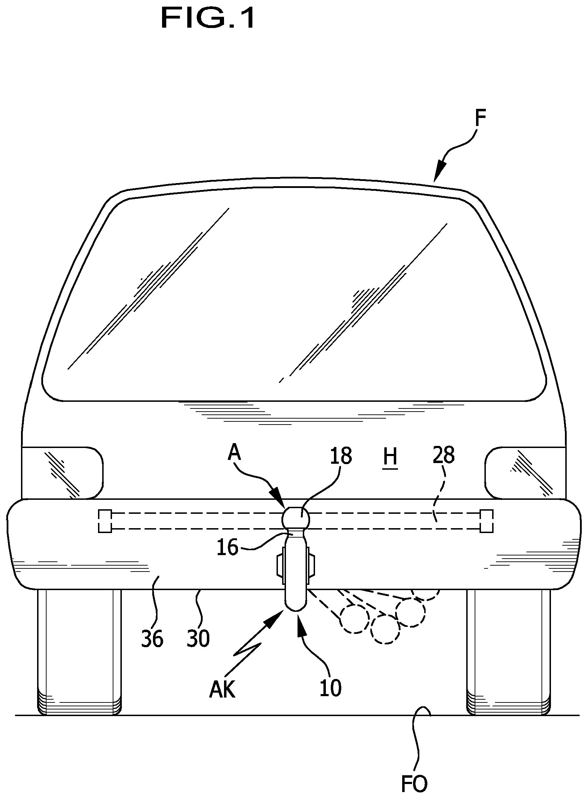

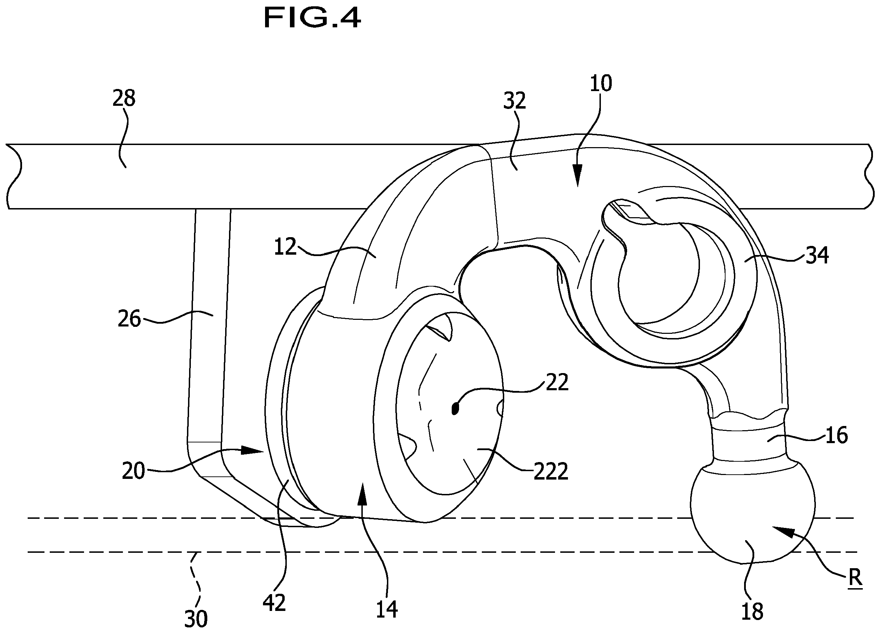

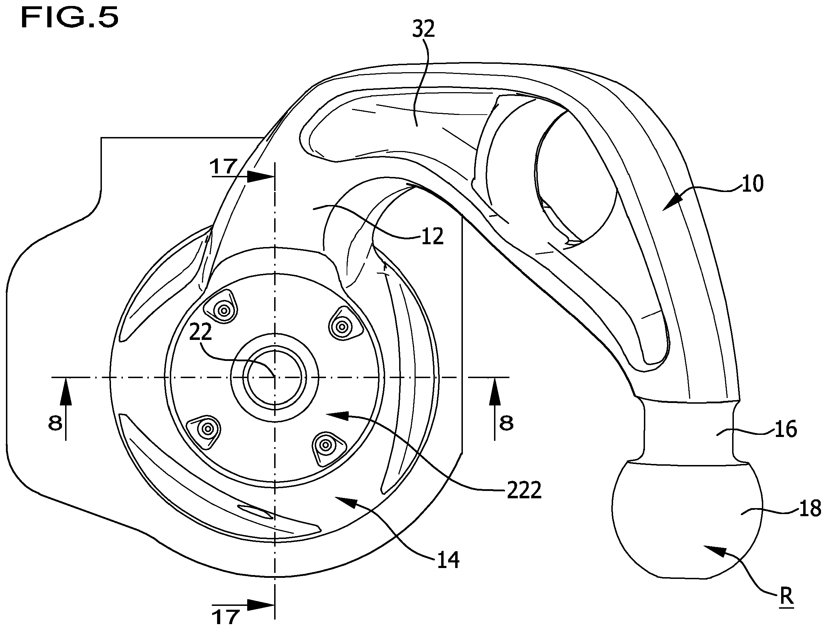

Ein erstes Ausführungsbeispiel einer Anhängekupplung AK für ein Kraftfahrzeug, dargestellt in Fig. 1, 2 und 3 in einer Arbeitsstellung A und in Fig. 4 und 5 in einer Ruhestellung R, umfasst einen als Ganzes mit 10 bezeichneten Kugelhals, welcher mit einem ersten Ende 12 an einem Schwenklagerkörper 14 gehalten ist und an einem zweiten Ende 16 eine als Ganzes mit 18 bezeichnete Kupplungskugel trägt, an welcher eine Kupplungskugelaufnahme eines Anhängers fixierbar ist.

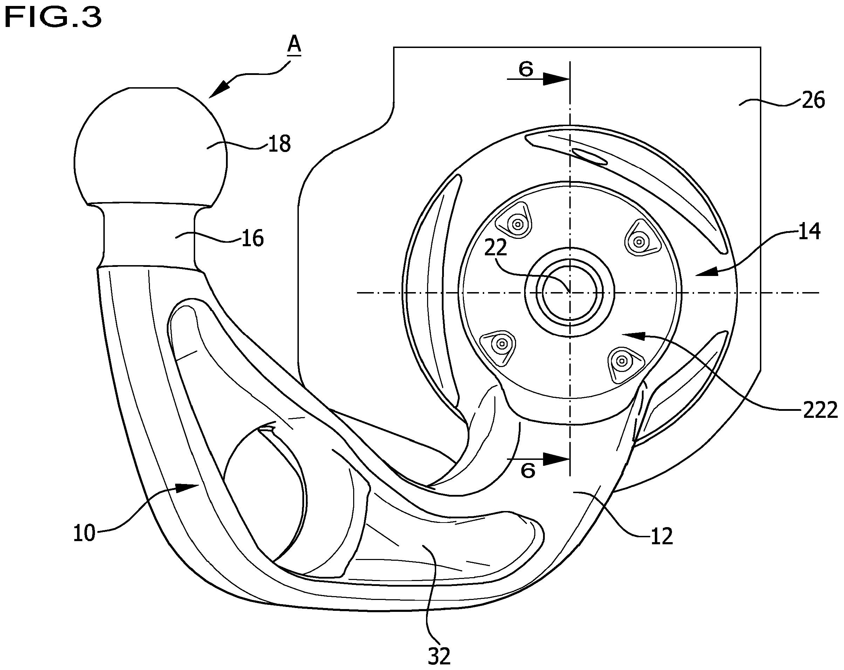

Der Schwenklagerkörper 14 ist durch eine als Ganzes mit 20 bezeichnete Schwenklagereinheit um eine Schwenkachse 22 relativ zu einem fahrzeugfesten Träger 24 schwenkbar gelagert, wobei der Träger 24 vorzugsweise ein die Schwenklagereinheit 20 haltendes Lagerteil 26, beispielsweise ausgebildet als Tragplatte, aufweist, welche sich vorzugsweise in einer zur Schwenkachse 22 senkrechten Ebene erstreckt, und einen das Lagerteil 26 tragenden fahrzeugfesten Querträger 28 aufweist, welcher in bekannter Weise an einem Heckbereich H einer Fahrzeugkarosserie F befestigbar ist, und zwar so, dass die Schwenklagereinheit 20 und der Träger 24 auf einer einer Fahrbahnoberfläche FO abgewandten Seite einer Unterkante 30 einer Stoßfängereinheit 36 liegen, und durch die Stoßfängereinheit 36 abgedeckt sind (Fig. 3).

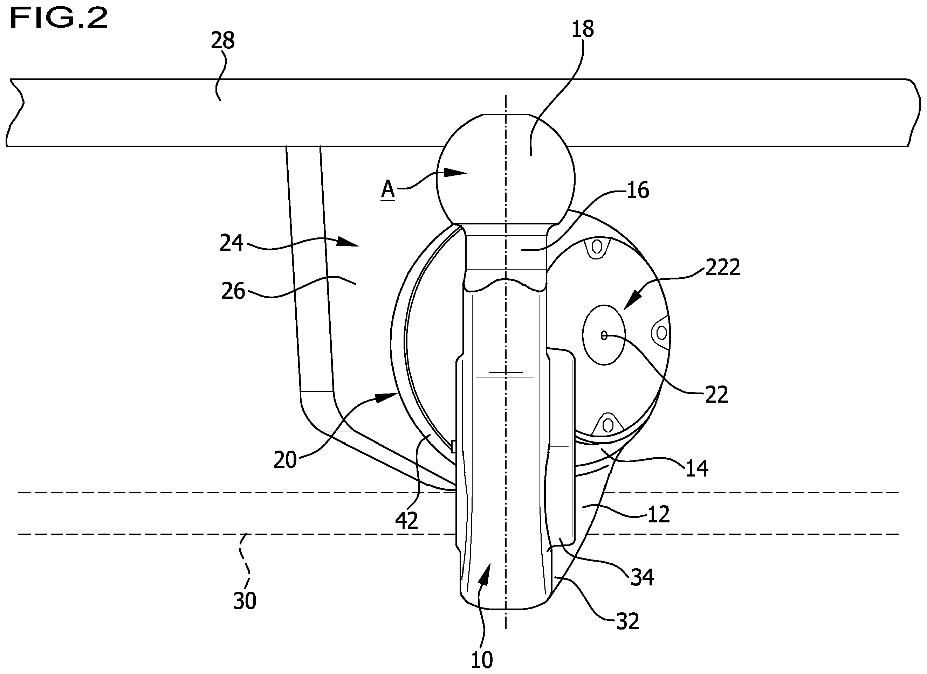

In der in Fig. 1 und 2 dargestellten Arbeitsstellung untergreift der Kugelhals 10 mit einem sich an das erste Ende 12 anschließenden Abschnitt 32 die Unterkante 30 der Stoßfängereinheit 36, so dass das zweite Ende 16 und die Kupplungskugel 18 mitsamt einer Steckdosenaufnahme 34 auf einer der Fahrzeugkarosserie F abgewandten Seite der hinteren Stoßfängereinheit 36 stehen, während in der Ruhestellung sowohl die Schwenklagereinheit 20 als auch der gesamte Kugelhals 10 mitsamt der Kupplungskugel 18 von der hinteren Stoßfängereinheit 36 gegen Sicht von hinten abgedeckt sind.

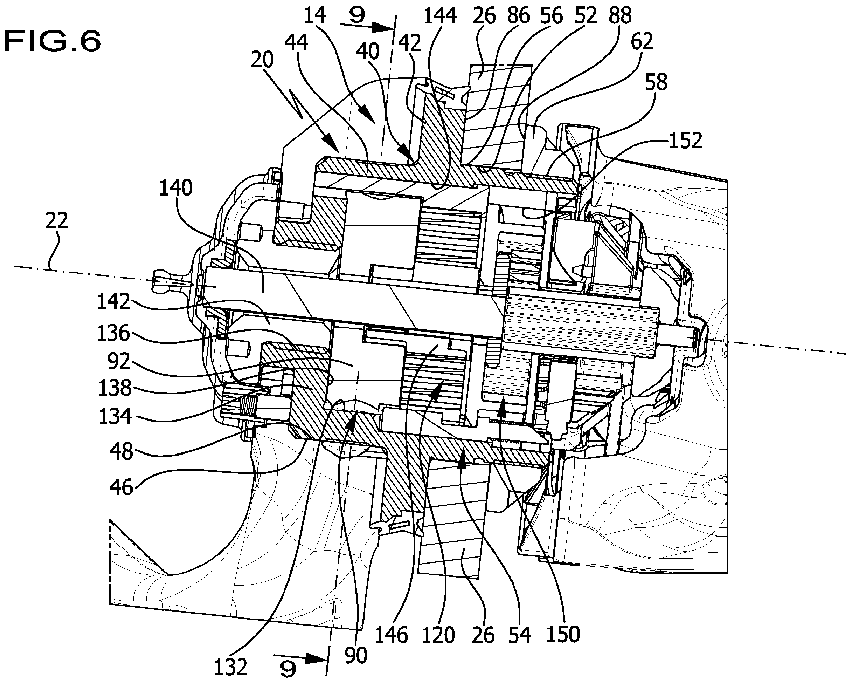

Die Schwenklagereinheit 20 umfasst, wie in Fig. 6 bis 8 dargestellt, ein Schwenklagergehäuse 40, welches mit einem einstückig an diesem angeformten Abstützflansch 42 an dem Lagerteil 26 anliegt und welches eine sich ausgehend von dem Flansch 42 von dem Lagerteil 26 weg erstreckende Führungshülse 44 umfasst, an welcher der Schwenklagerkörper 14 drehbar gelagert ist.

Hierzu umfasst die Führungshülse 44 eine zylindrische Außenmantelfläche 46, an welcher der Schwenklagerkörper 14 mit einer zylindrischen Innenfläche 48 anliegt und dadurch um die Schwenkachse 22 eine Drehführung um die Achse 22 erfährt, so dass der Schwenklagerkörper 14 derart relativ zum Führungskörper 40 drehbar ist, dass der Kugelhals 10 von der Arbeitsstellung A in die Ruhestellung R und umgekehrt verschwenkbar ist.

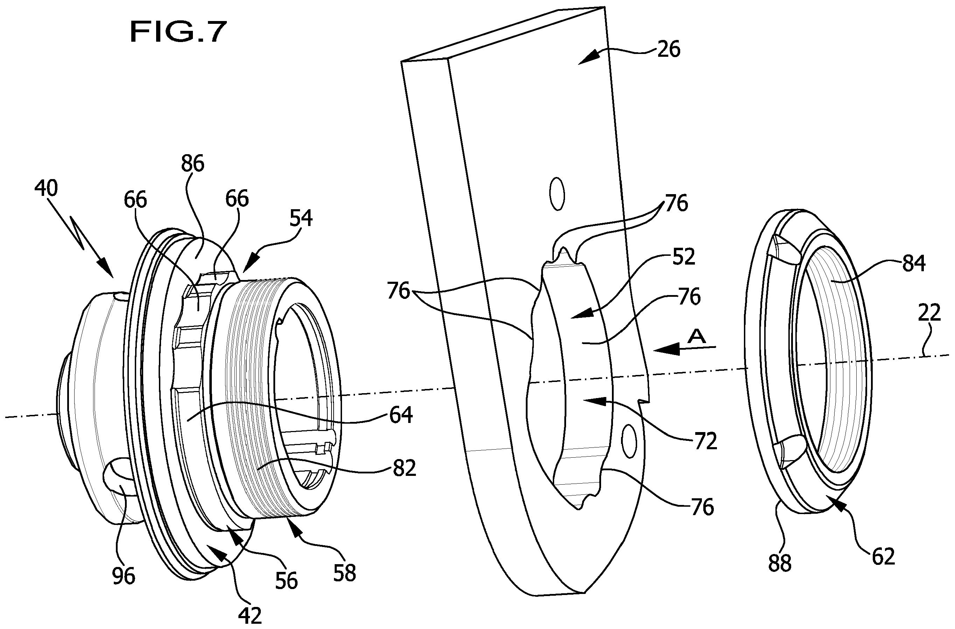

Das Schwenklagergehäuse 40 umfasst außerdem einen sich durch einen eine Aufnahme für das Schwenklagergehäuse 40 bildenden Durchbruch 52 in dem Lagerteil 26 erstreckenden Fortsatz 54, der eine an dem Durchbruch 52 anliegende Außenkontur 56 und eine auf einer dem Flansch 42 gegenüberliegenden Seite der Außenkontur 56 an dem Fortsatz 54 angeordnete Halteaufnahme 58 für einen an dieser fixierbaren Haltering 62 trägt, wobei der Führungskörper 40 durch den Fortsatz 54 aufgrund dessen nicht rotationssymmetrischer sondern radial variierender Außenkontur 56 (Fig. 7) in dem entsprechend geformten Durchbruch 52 durch Formschluss drehfest in dem Lagerteil 26 sitzt und durch den Flansch 42 sowie den Haltering 62, die auf gegenüberliegenden Seiten des als Tragplatte ausgebildeten Lagerteils 26 anliegen, an dieser fixiert ist.

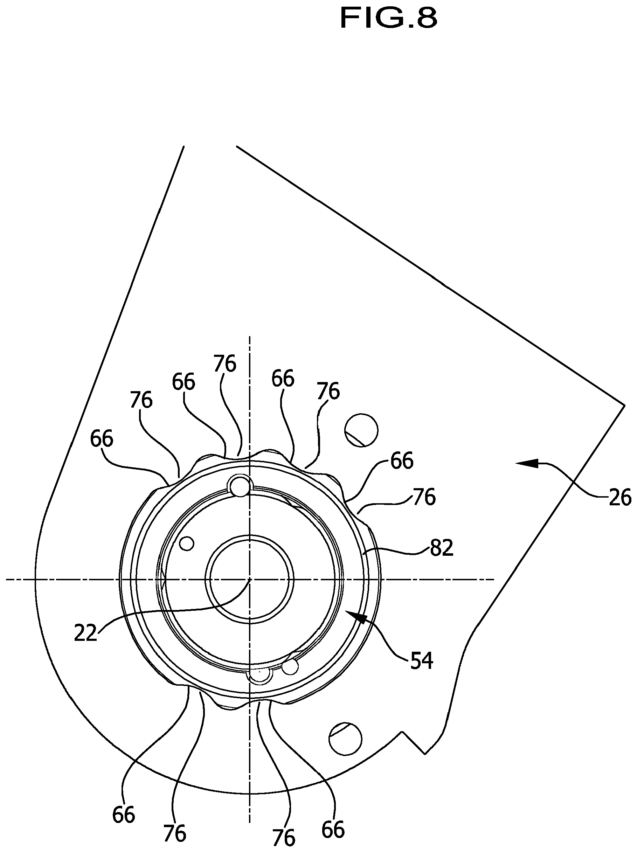

Insbesondere ist die radial variierende Außenkontur 56 so ausgebildet, dass diese abweichend von einer kreiszylindrischen Außenfläche 64 nach innen, insbesondere radial zur Schwenkachse 22 hin, verlaufende Vertiefungen 66 aufweist, die beispielsweise die Oberflächenform einer Innenfläche eines Zylindersegments, insbesondere eines Kreiszylindersegments, aufweisen, wobei, wie in Fig. 8 dargestellt, mehrere derartige bezogen auf die Schwenkachse 22 um einen Winkel relativ zueinander versetzte Vertiefungen 66 in dem Fortsatz 54 vorgesehen sind.

Ferner ist der Durchbruch 52 in dem Lagerteil 26 mit einer mit der Außenkontur 56 korrespondierenden radiale variierende Innenkontur 72 versehen, die eine kreiszylindrische Innenfläche 74 zur Aufnahme der kreiszylindrischen Außenfläche 64 aufweist, von welcher ausgehend radial nach innen, insbesondere zur Schwenkachse 22 hin, überstehende Vorsprünge 76 ausgehen, die die Form von Außenflächen von Kreiszylindersegmenten haben und bei durch den Durchbruch 52 sich hindurcherstreckendem Fortsatz 54 in die Vertiefungen 66 eintauchen, um den Fortsatz 54 formschlüssig drehfest in dem Durchbruch 52 zu fixieren.

Die Halteaufnahme 58 ist beispielsweise als Außengewinde 82 ausgebildet, auf welches der Haltering 62 mit einem Innengewinde 84 aufgeschraubt ist, so dass der Haltering 62 gegen eine Bewegung in Richtung der Schwenkachse 22 auf dem Fortsatz 54 fixiert ist.

Folglich ist das Schwenklagergehäuse 40 durch den Flansch 42 und dem Haltering 62, die beide als Abstützkörper wirken und mit Stützflächen 86 und 88 aufeinander gegenüberliegenden Seiten am Lagerteil 26 anliegen (Fig. 6) relativ zum Lagerteil fixiert.

Das Schwenklagergehäuse 40 bildet somit durch seine feste Verbindung mit dem Lagerteil 26 und dem Träger 24 die fahrzeugfeste Drehlagerung für den Schwenklagerkörper 14.

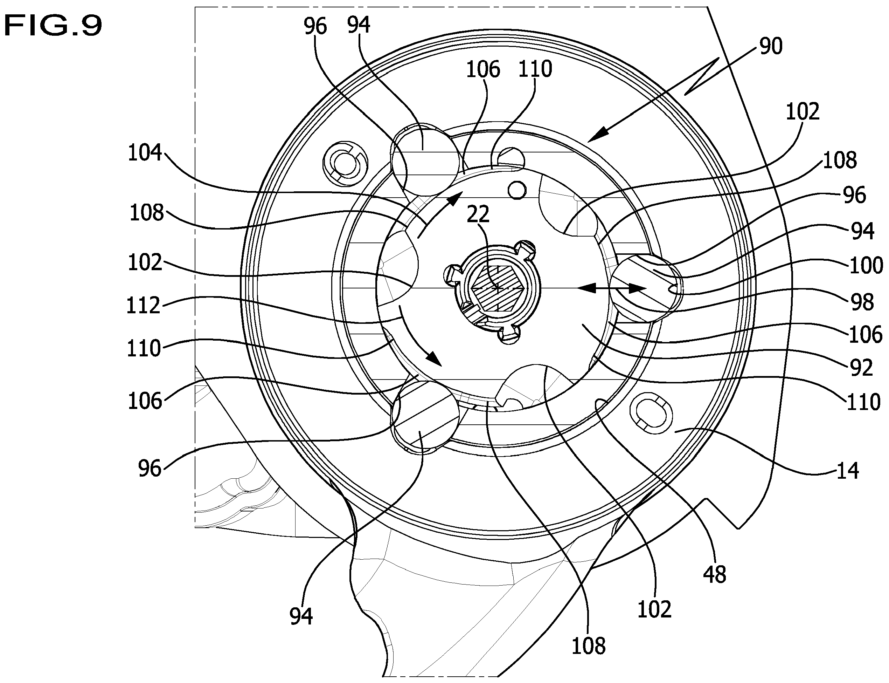

Zur Fixierung des Schwenklagerkörpers 14 in der Arbeitsstellung A ist die Schwenklagereinheit 20 mit einer als Ganzes mit 90 bezeichneten Drehblockiereinrichtung (Fig. 9) versehen, welche einen Betätigungskörper 92, mehrere durch den Betätigungskörper 92 beaufschlagbare Drehblockierkörper 94, von denen jeder in einer Führungsaufnahme 96 der Führungshülse 44 in einer im Wesentlichen radial zur Schwenkachse 22 verlaufenden Führungsrichtung 98 bewegbar geführt ist, sowie sich ausgehend von einer Innenfläche 48 des Schwenklagerkörpers 14 in diesen hineinerstreckende Aufnahmen 100, mit denen die Drehblockierkörper 94 in der Arbeitsstellung A in Eingriff bringbar sind, aufweist, wobei die Aufnahmen 100 in radialer Richtung zur Schwenkachse 22 zunehmend einen geringeren Abstand voneinander aufweisende Wandflächen haben.

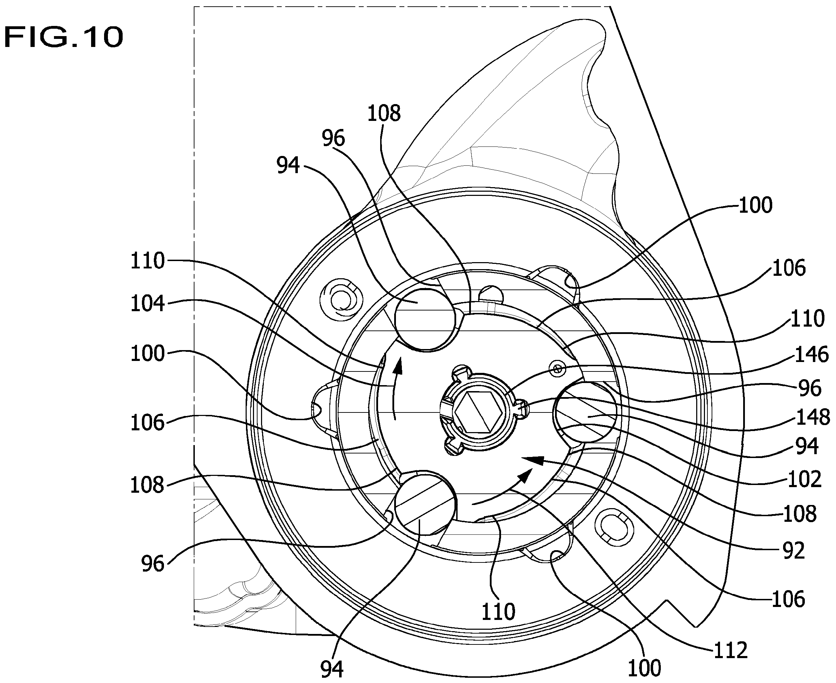

Zum geeigneten Bewegen und Positionieren der Drehblockierkörper 94 in der Führungsrichtung 98 ist der Betätigungskörper 92 mit einem der Zahl der Drehblockierkörper 94 entsprechenden Satz von Rückzugsaufnahmen 102 und sich in einer Umlaufrichtung 104 an die Rückzugsaufnahmen 102 anschließenden Druckflächen 106, die als radial zur Schwenkachse 22 wirkende Keilflächen ausgebildet sind, versehen, wobei die Drehblockierkörper 94 in ihrer Lösestellung in die Rückzugsaufnahmen 102 soweit eintauchen können (Fig. 10), dass sie nicht mehr über eine Außenmantelfläche 46 der Führungshülse 44 überstehen, und wobei sich die Druckflächen 106 jeweils von einem sich unmittelbar an die jeweilige Rückzugsaufnahme 102 anschließenden radial innenliegenden Anfangsbereich 108 mit zunehmender Erstreckung in der Umlaufrichtung 104 zunehmend radial zur Schwenkachse 22 nach außen, bis zu jeweils einem radial außenliegenden Endbereich 110 erstrecken und somit bei einer Drehbewegung in einer Drehrichtung 112 des Betätigungskörpers 92 als Keilflächen auf die Drehblockierkörper 94 wirken, um diese in ihre Drehblockierstellung zu bewegen.

Vorzugsweise verlaufen dabei die Druckflächen 106 als Spiral- oder Evolventensegmente relativ zur Schwenkachse 22.

Um die Drehblockierkörper 94 entweder in ihrer Drehblockierstellung durch Beaufschlagen derselben mit den Druckflächen 106 zwischen dem Anfangsbereich 108 und dem Endbereich 110 zu halten oder in der Lösestellung in die Rückzugsaufnahme 102 eintauchen zu lassen, ist der Betätigungskörper 92 ebenfalls um die Schwenkachse 22, insbesondere koaxial zu dieser, drehbar und zwar so, dass der Satz von Rückzugsaufnahmen 102 den Drehblockierkörpern 94 zugewandt ist und diesen, wie in Fig. 10 dargestellt, in seiner inaktiven Stellung die Möglichkeit gibt, in die Rückzugsaufnahmen 102 in radialer Richtung zur Schwenkachse 22 hin einzutauchen, um den jeweiligen Drehblockierkörpern 94 die Möglichkeit zu eröffnen, die Aufnahmen 100 mitsamt dem Schwenklagerkörper 14 hinsichtlich einer Drehung um die Schwenkachse 22 relativ zur Führungshülse 44 freizugeben, so dass der Schwenklagerkörper 14 mit dem Kugelhals 10 relativ zur Führungshülse 44 ungehindert und frei drehbar ist, wie in Fig. 10 dargestellt, wobei in diesem Fall die Drehblockierkörper 94 sich nicht über die Außenmantelfläche 46 der Führungshülse 44 hinaus erstrecken.

Eine Drehung des Betätigungskörpers 92 bei in den Rückzugsaufnahmen 102 sitzenden Drehblockierkörpern 94 in der Drehrichtung 112 entgegengesetzt zur Umlaufrichtung 104 bewirkt, dass die Drehblockierkörper 94 aus den Rückzugsaufnahmen 102 heraus bewegt werden und zunächst in der aktiven Stellung des Betätigungskörpers 92 auf den Anfangsbereichen 108 der Druckflächen 106 aufsitzen, dabei jedoch bereits in die Aufnahmen 100 eintauchen und damit die freie Drehbarkeit des Schwenklagerkörpers 14 relativ zur Führungshülse 44 unterbinden.

Wird der Betätigungskörper 92 in der Drehrichtung 112 entgegengesetzt zur Umlaufrichtung 104 weitergedreht, so wirken immer weiter radial gegenüber der Schwenkachse 22 außen liegenden Bereiche der Druckflächen 106 auf die Drehblockierkörper 94 und drücken somit die Drehblockierkörper 94 zunehmend in die Aufnahmen 100 hinein (Fig. 9), um somit in der Arbeitsstellung A des Kugelhalses 10 eine im Wesentlichen spielfreie Fixierung des Schwenklagerkörpers 14 relativ zum Schwenklagergehäuse 40, in diesem Fall zur Führungshülse 44, zu erreichen.

In der Drehblockierstellung der Drehblockierkörper 94 steht der Betätigungskörper 92 in seiner aktiven Stellung so, dass die Drehblockierkörper 94, wie in Fig. 9 dargestellt, ungefähr auf Mittelbereichen, die zwischen den Anfangsbereichen 108 und den Endbereichen 110 liegen, der Druckflächen 106 aufsitzen und von diesen beaufschlagt werden.

Vorzugsweise sind die Drehblockierkörper 94, als Kugeln, ausgebildet, die somit einerseits an dem Betätigungskörper 92 und andererseits auch an den Aufnahmen 100 anliegen.

Um den Betätigungskörper 92 zu veranlassen, sich ohne äußere Einwirkung stets in der Drehrichtung 112 so zu bewegen, dass sich die Drehblockierkörper 94 in Richtung der Drehblockierstellung bewegen, ist der Betätigungskörper 92 durch eine Drehfeder 124 beaufschlagt (Fig. 6), die einerseits auf den Betätigungskörper 92 wirkt und andererseits radial außenliegend an dem Schwenklagergehäuse 40 abgestützt ist.

Die Drehfeder 124 bewirkt auch, dass der Betätigungskörper 92 die Drehblockierkörper 94 kraftbeaufschlagt in die Aufnahmen 100 drückt und somit wird der Schwenklagerkörper 14 spielfrei fixiert, wobei die Spielfreiheit auch bei sich aufgrund der Belastungen im Betrieb verändernden Geometrie der Aufnahmen 100 durch ein Weiterbeaufschlagen des Betätigungskörpers 92 in der Drehrichtung 112 aufrechterhalten wird.

Die Führungshülse 44 erstreckt sich mit einem eine Aufnahme 132 für den Betätigungskörper 92 bildenden Abschnitt zwischen dem Flansch 42 und einem die Führungshülse 44 abschließenden sich radial zur Schwenkachse 22 hinerstreckenden Flansch 134, welcher vorzugsweise einstückig an die Führungshülse 44 angeformt ist und die Aufnahme 132 für den Betätigungskörper 92 begrenzt, so dass der Betätigungskörper 92 radial zur Schwenkachse 22 durch die Aufnahme 132 der Führungshülse 44 geführt ist und axial in Richtung der Schwenkachse 22 durch Anlage an einer Innenseite 138 des Flansches 134 geführt ist.

Der Flansch 134 weist ferner noch eine zur Schwenkachse 22 koaxiale Aufnahme 136 auf, in welcher ein von einer Schwenkantriebswelle 140 durchsetzter Einsatz 142 eingesetzt, insbesondere eingeschraubt ist, der in der Aufnahme 136 sitzt.

Auf einer dem Flansch 134 gegenüberliegenden Seite der Aufnahme 132 für den Betätigungskörper 92 bildet die Führungshülse 44, beispielsweise mit einem den Flansch 42 teilweise durchsetzenden Abschnitt, eine Drehfederaufnahme 144, in welcher im Anschluss an den Betätigungskörper 92 die Drehfeder 124 angeordnet ist, die einerseits mit einem äußeren Ende in der Drehfederaufnahme 144 fixiert ist und mit einem inneren Ende mit einer Antriebshülse 146 verbunden ist, welche drehfest mit dem Betätigungskörper 92 gekoppelt ist.

Hierzu ist die Antriebshülse 146, wie in den Fig. 9 und 10 dargestellt, beispielsweise mit Fortsätzen 148 versehen, die zur Herstellung einer Formschlussverbindung in entsprechende Ausnehmungen in den Betätigungskörper 92 eingreifen.

Dadurch, dass die Drehfeder 124 auf die Antriebshülse 146 wirkt, die drehfest mit dem Betätigungskörper 92 gekoppelt ist, erfolgt durch das Einwirken der Drehfeder 124 auf die Antriebshülse 146 ein Antrieb des Betätigungskörpers 92 in der Drehrichtung 112, so dass der Betätigungskörper 92 bei ungehinderter Einwirkung der Drehfeder 124 auf die Antriebshülse 146 den Betätigungskörper 92 stets so beaufschlagt, dass dieser die Tendenz hat die Drehblockierkörper 94 kraftbeaufschlagt in die Aufnahmen 100 zu drücken und somit den Schwenklagerkörper 14 relativ zur Führungshülse 44 drehfest und insbesondere spielfrei zu fixieren.

Um die Drehblockierkörper 94 in die Lösestellung bewegen zu können, ist eine Einwirkung auf den Betätigungskörper 92 entgegengesetzt zur Drehrichtung 112 und auch somit entgegengesetzt zur Wirkung der Drehfeder 124 erforderlich.

Hierzu ist die Antriebshülse 146 mittels eines als Ganzes mit 150 bezeichneten Planetengetriebes 130 antreibbar (Fig. 6), welches in einer Getriebeaufnahme 152 der Führungshülse 44, insbesondere koaxial zur Schwenkachse 22, angeordnet ist, die beispielsweise teilweise innerhalb des Durchbruchs 52 des Lagerteils 26 angeordnet ist und vorzugsweise sich auf einer dem Flansch 42 gegenüberliegenden Seite über dem Durchbruch 52 des Lagerteils 26 hinaus erstreckt.

Eine Möglichkeit zum Bewegen der Drehblockierkörper 94 in die Lösestellung und alternativ zum Antreiben der Schwenkantriebswelle 140 ist in den europäischen Patentanmeldungen EP 3 141 405 A oder EP 3 141 406 A beschrieben, auf welche hiermit Bezug genommen wird, wobei mit der Drehblockiereinrichtung 90 lediglich eine Fixierung des Schwenklagerkörper 14 in der Arbeitsstellung A erfolgt und für eine Fixierung des Schwenklagerkörpers 14 in der Ruhestellung eine Ruhestellungsrasteinrichtung vorgesehen und beschrieben ist, so dass diesbezüglich auf die Ausführungen in diesen Patentanmeldungen Bezug genommen wird.

Es ist aber auch möglich, mit der Drehblockiereinrichtung 90 den Schwenklagerkörper 14 sowohl in der Arbeitsstellung A als auch in der Ruhestellung R zu fixieren, wie dies in den europäischen Patentanmeldungen EP 1 886 847, EP 2 141 034, EP 2 266 820 beschrieben ist, auf welche hiermit Bezug genommen wird.

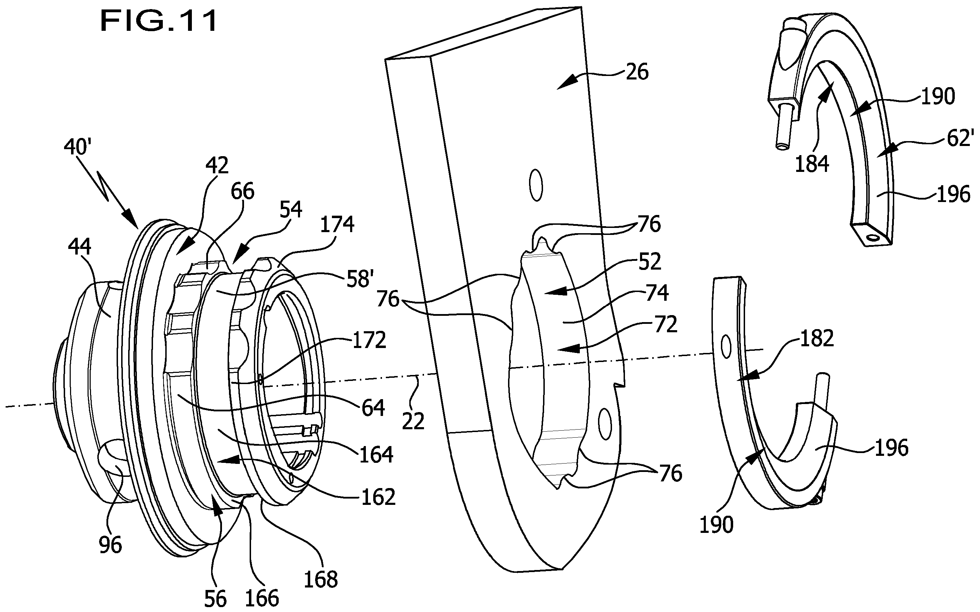

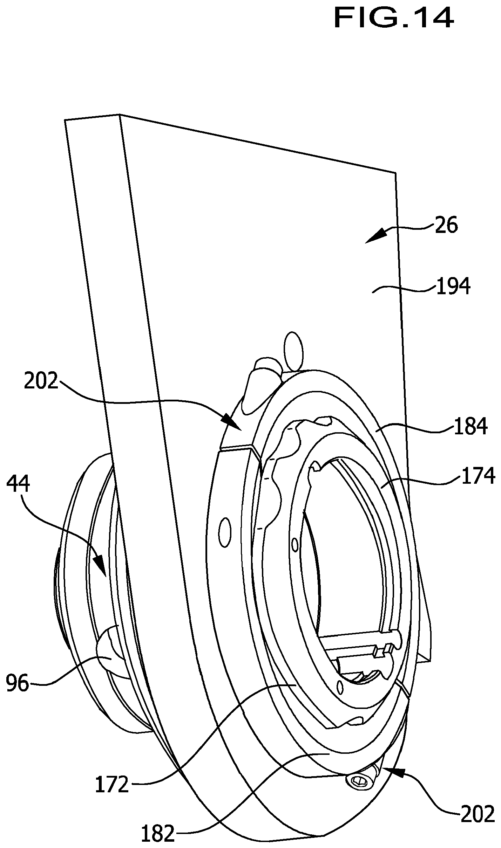

Bei einem zweiten Ausführungsbeispiel einer Anhängekupplung, welches eine erfindungsgemäße Anhängekupplung darstellt, dargestellt in den Fig. 11 bis 14 ist das Schwenklagergehäuse 40' ebenfalls mit der Führungshülse 44 sowie dem Flansch 42 versehen, und außerdem ist der Fortsatz 54 im Bereich seiner Außenkontur 56 in gleicher Weise ausgebildet, wie im Zusammenhang mit dem ersten Ausführungsbeispiel beschrieben, so dass diesbezüglich auf die Ausführungen zum ersten Ausführungsbeispiel vollinhaltlich Bezug genommen wird, wobei dieselben Elemente mit denselben Bezugszeichen versehen sind.

Desgleichen ist der Durchbruch 52 mit derselben Innenkontur 72 versehen, so dass diesbezüglich ebenfalls auf die Ausführungen zum ersten Ausführungsbeispiel vollinhaltlich Bezug genommen werden kann.

Im Gegensatz zum ersten Ausführungsbeispiel ist allerdings die Halteaufnahme 58' für den Haltering 62' anders ausgebildet.

Bei dem zweiten, eine erfindungsgemäße Anhängekupplung darstellenden Ausführungsbeispiel ist die Halteaufnahme 58' als Nut 162 ausgebildet, welche relativ zu der kreiszylindrischen Außenfläche 64 der Außenkontur 56 in Richtung der Schwenkachse 22 vertieft bis zu einem Nutgrund 164 verläuft, der somit bezüglich der Schwenkachse 22 in einem geringeren radialen Abstand als die kreiszylindrische Außenfläche 64 verläuft.

Somit ist zwischen der Außenkontur 56 und dem Nutgrund 164 eine Nutwand 166 ausgebildet. Der Nutwand 166 gegenüberliegend weißt die Nut 162 ebenfalls eine Nutwand 168 auf, die zwischen dem Nutgrund 164 und einer Außenkontur 172 eines die Nut 162 begrenzenden Flanschkörpers 174 gebildet ist, wobei der Flanschkörper 174 vorzugsweise einstückig an das Schwenklagergehäuse 40 angeformt ist und die Außenkontur 172 aus Gründen der vereinfachten mechanischen Bearbeitung dieselbe Form aufweist, wie die Außenkontur 56.

Vorzugsweise verläuft die Nutwand 168 ausgehend von dem Nutgrund 164 mit zunehmender radialer Erstreckung bis zur Außenkontur 172 in sich vergrößerndem Abstand zur Nutwand 166 und somit insbesondere zur Schwenkachse 22 sich konisch erweiternd und bildet eine Keilfläche 170.

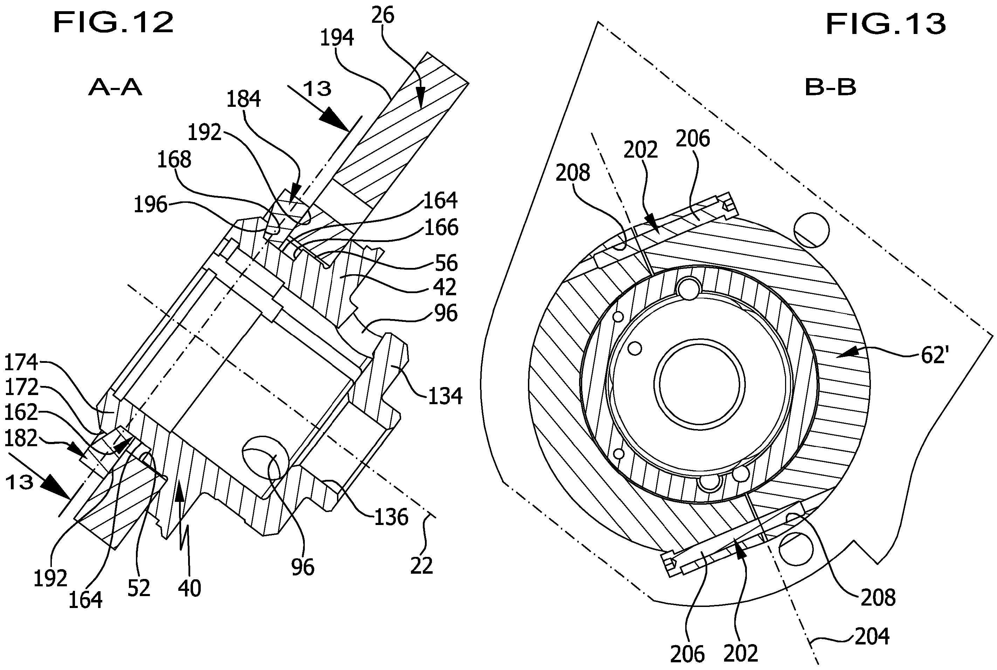

Damit besteht die Möglichkeit, bei dem zweiten Ausführungsbeispiel den Haltering 62', wie in Fig. 11 und 13 dargestellt, als zweigeteilten Ringkörper mit zwei Ringsegmenten 182 und 184 auszubilden, wobei jedes der Ringsegmente 182 und 184 einen Keilkörper 190 darstellt, der eine Stützfläche 192 aufweist, mit welcher sich dieser an einer den Durchbruch 52 umschließenden Oberfläche 194 des Lagerteils 26 abstützen kann und eine der Stützfläche 192 gegenüberliegende ebenfalls konisch, insbesondere konisch zur Schwenkachse 52, verlaufende Keilfläche 196 aufweist, mit welcher sich das jeweilige Ringsegment 182, 184 an der Keilfläche 170 der Nutwand 168 abstützt und somit aufgrund seiner Keilwirkung in der Lage ist, das Schwenklagergehäuse 40 mit dem Flansch 42 auf der einen Seite kraftbeaufschlagt an dem Lagerteil 26 anzulegen und somit das Lagerteil 26 zwischen sich selbst und dem Flansch 42 einzuspannen, wodurch gleichzeitig erreicht wird, dass das Schwenklagergehäuse 40 in axialer Richtung der Schwenkachse 22 relativ zum Lagerteil 26 festgelegt ist, wobei eine zusätzliche drehfeste Festlegung durch die radial variierende Außenkontur 56 geschaffen ist, die in dem ebenfalls mit der radial variierenden Innenkontur 72 versehenen Durchbruch 52 in der bereits im Zusammenhang mit dem ersten Ausführungsbeispiel beschriebenen Art und Weise drehfest festgelegt ist.

Die beiden Ringsegmente 182 und 184 des Halterings 62' sind vorzugsweise durch Spannvorrichtungen 202 in Richtung ihrer Trennebene 204 beaufschlagbar, so dass dadurch beide Ringsegmente 182 und 184 in Richtung aufeinanderzu verspannt werden können, um in der beschriebenen Art und Weise das Schwenklagergehäuse 40 relativ zum Lagerteil 26 verspannen.

Vorzugsweise sind die Spannvorrichtungen 202 durch in eines der Ringsegmente 182, 184 eingeschraubte Schrauben 206 gebildet, die in Gewindebohrungen 208 des jeweils anderen Ringsegments 184, 182 eingeschraubt sind, wodurch diese Schrauben 206 die Ringsegmente 182 und 184 in Richtung aufeinanderzu verspannen.

Im Übrigen sind bei dem zweiten Ausführungsbeispiel diejenigen Elemente, die mit denen des ersten Ausführungsbeispiels identisch sind, mit denselben Bezugszeichen versehen, so dass auf die Ausführungen zum ersten Ausführungsbeispiel vollinhaltlich Bezug genommen werden kann.

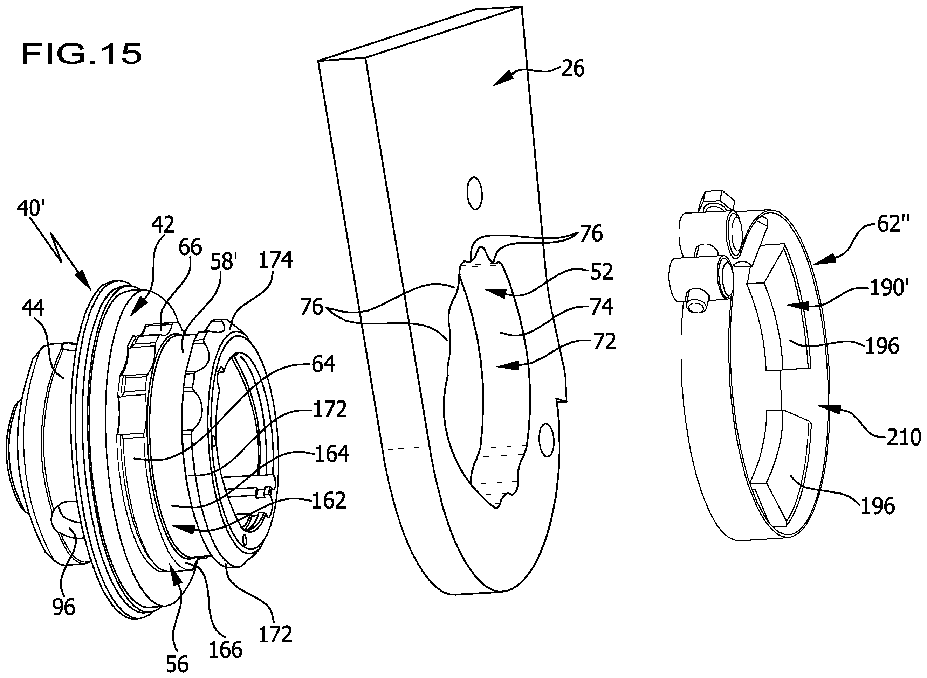

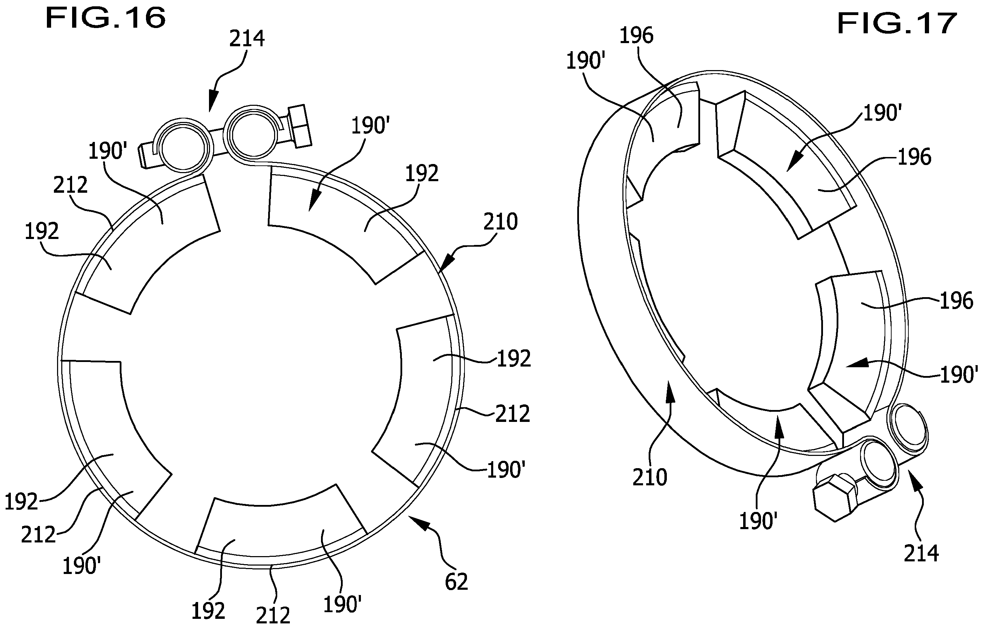

Bei einem dritten Ausführungsbeispiel einer Anhängekupplung, welches eine erfindungsgemäße Anhängekupplung darstellt, dargestellt in den Fig. 15 bis 17, sind insbesondere das Schwenklagergehäuse 40' und diejenigen Elemente, die mit denselben Bezugszeichen versehen sind, in gleicher Weise ausgebildet, wie beim ersten und zweiten Ausführungsbeispiel, so dass diesbezüglich vollinhaltlich auf die Ausführungen zu den voranstehenden Ausführungsbeispielen, insbesondere zum zweiten Ausführungsbeispiel, Bezug genommen werden kann.

Auch der Durchbruch 52 ist in gleicher Weise ausgebildet wie beim ersten Ausführungsbeispiel, so dass auch diesbezüglich auf die Ausführungen zum ersten Ausführungsbeispiel vollinhaltlich Bezug genommen werden kann.

Im Gegensatz zum ersten und zweiten Ausführungsbeispiel ist der Haltering 62" mit einer Mehrzahl von als Keilkörper 190' ausgebildeten Stützelementen versehen, wobei jeder der Keilkörper 190' in der Form eines Bogensegments ausgebildet ist und einerseits die Stützfläche 192 zur Abstützung an der Oberfläche 194 des Lagerteils 26 aufweist und andererseits die Keilfläche 196 aufweist, die mit der Nutwand 168 zusammenwirkt.

Sämtliche Keilkörper 190' sitzen innerhalb eines als Spannring 210 ausgebildeten Stützelemententrägers, welcher die Keilkörper 190' auf ihrer Außenseite 212 umschließt und welcher eine als Spannschloss 214 ausgebildetes Spannelement aufweist, das geöffnet werden kann, um die Keilkörper 190' in Eingriff mit der Nut 162 und dabei einerseits mit den Stützflächen 192 in Anlage an der Oberfläche 194 des Lagerteils 26 und andererseits mit der Keilfläche 196 in Anlage an die Nutwand 168 bringen zu können, und mit welchem der Spannring 210 sich in radialer Richtung zur Schwenkachse verengend spannen lässt, so dass der Spannring 210 die Keilkörper 190' in die Nut 162 drückt und somit mit jedem der Keilkörper 190' ein Verspannen des Schwenklagergehäuses 40 mit dem Lagerteil 26 bewirkt, in gleicher Weise wie dies im Zusammenhang mit dem zweiten Ausführungsbeispiel beschrieben wurde.

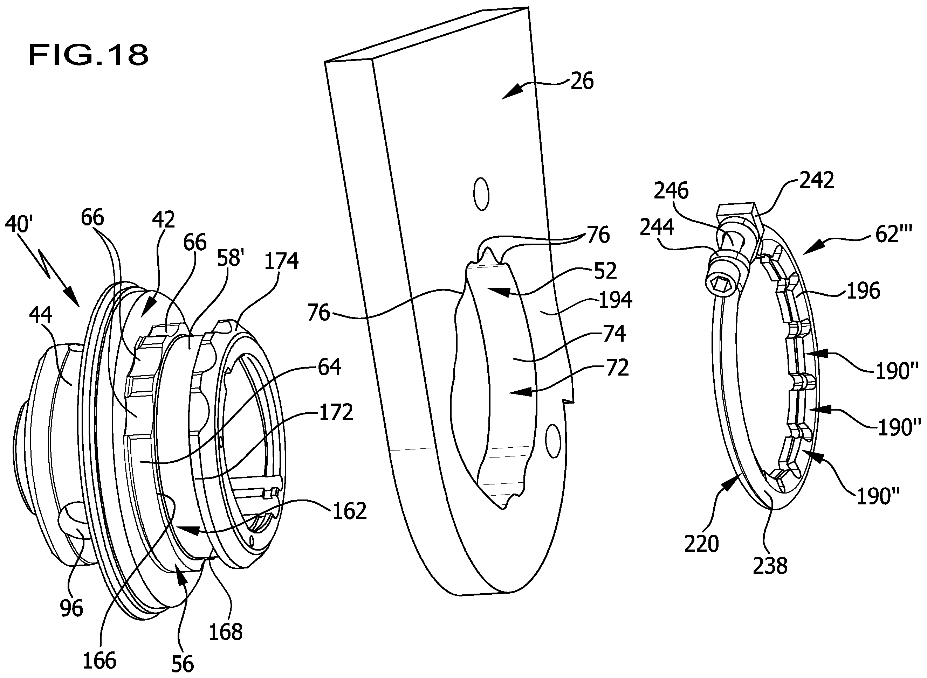

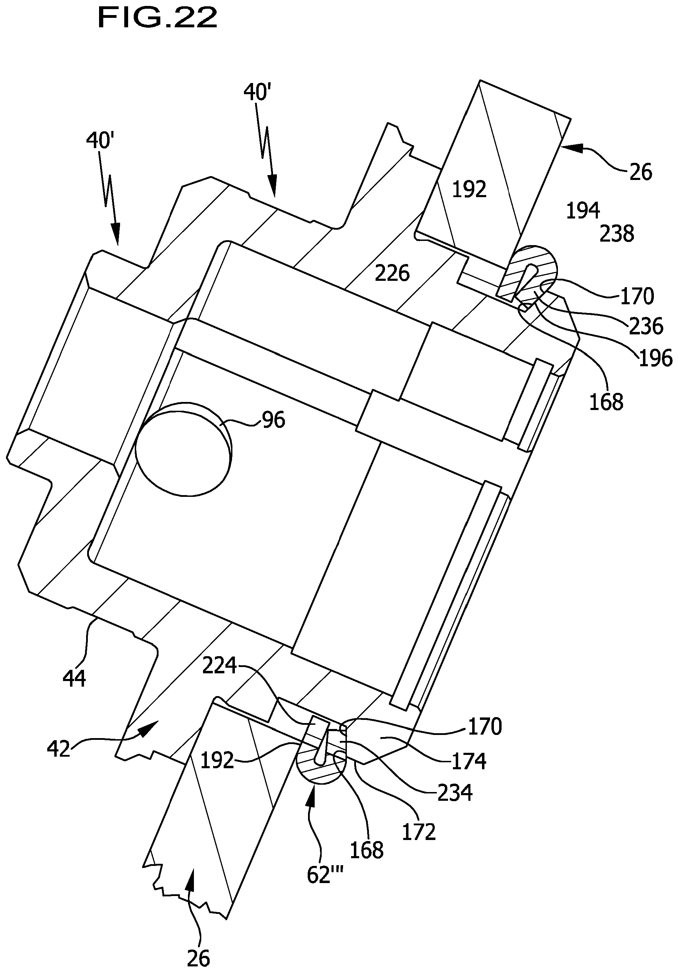

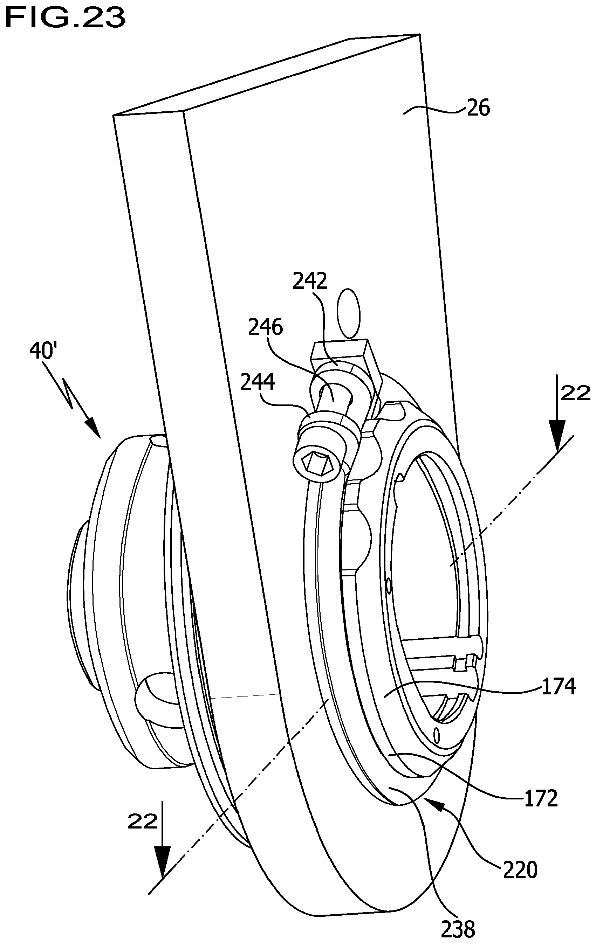

Bei einem vierten Ausführungsbeispiel einer Anhängekupplung, welches eine erfindungsgemäße Anhängekupplung darstellt, dargestellt in den Fig. 18 bis 23, sind das Schwenklagergehäuse 40' und diejenigen Elemente, die mit denselben Bezugszeichen versehen sind, in gleicher Weise ausgebildet wie bei den voranstehenden Ausführungsbeispielen, so dass diesbezüglich vollinhaltlich auf die Ausführungen zu den voranstehenden Ausführungsbeispielen, insbesondere zum dritten Ausführungsbeispiel, Bezug genommen werden kann.

Auch der Durchbruch 52 ist in gleicher Weise ausgebildet wie bei den voranstehenden Ausführungsbeispielen, so dass auch diesbezüglich auf die Ausführungen zu den voranstehenden Ausführungsbeispielen vollinhaltlich Bezug genommen werden kann.

Im Gegensatz zu den voranstehenden Ausführungsbeispielen, insbesondere zum dritten Ausführungsbeispiel ist der Haltering 62‴ mit einer Mehrzahl von Keilkörpern 190" versehen, von denen jeder in der Form eines Segments ausgebildet ist und jeder der Keilkörper 190" eine Stützfläche 192 zur Abstützung an der Oberfläche 194 des Lagerteils 26 aufweist und andererseits eine Keilfläche 196 aufweist, die mit der Nutwand 168 zusammenwirkt.

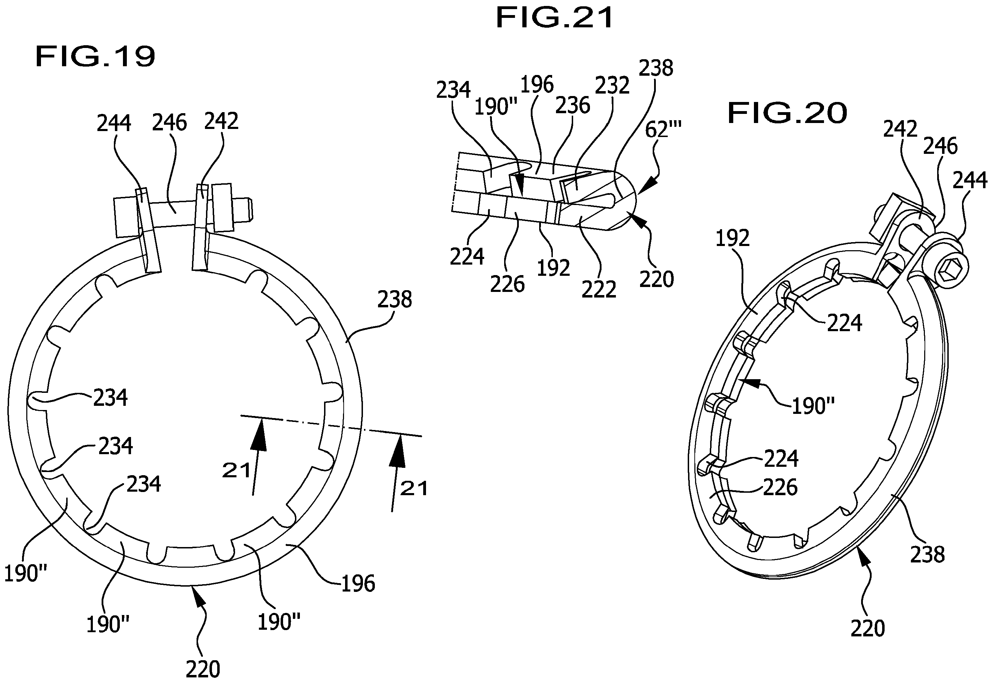

Die Keilkörper 190" werden dabei, wie in Fig. 21 dargestellt, gebildet durch ein U-förmig gefaltetes Bandmaterial 220, dessen einer Schenkel 222 mit Ausstanzungen 224 versehen ist, die den Schenkel 222 in einzelne Teilsegmente 226 unterteilen und dessen anderer Schenkel 232 ebenfalls mit Ausstanzungen 234 versehen ist, die somit den Schenkel 232 in Teilsegmente 236 unterteilen, wobei die Teilsegmente 226 und 236 eine identische Form haben und so relativ zueinander ausgebildet sind, dass diese ausgehend von einem die Teilsegmente 226 und 236 verbindenden U-förmigen Rücken 238 aufeinander zu verlaufen, was dazu führt, dass die Teilsegmente 236 jeweils eine Keilfläche 196 bilden, die keilförmig zur Stützfläche 192, gebildet durch das Teilsegment 226, verläuft.

Ein derartiges langgestrecktes Band wird zu einem Ringkörper gebogen, wobei insbesondere der Rücken 238 eine ringförmige Form annimmt und die Teilsegmente 226 und 236 längs eines durch den Rücken 238 gebildeten Kreisbogens angeordnet sind, wobei der Rücken 238 einen Träger für die Teilsegmente 226 und 236 darstellt.

Insbesondere ist der Träger 238 endseitig mit radial nach außen überstehenden Flanschen 242 und 244 versehen, die jeweils durch ein als Spannschloss 246 ausgebildetes Spannelement aufeinander zu bewegbar sind, um somit die Keilkörper 190" in die Nut 162 hinein zu bewegen, so dass die Keilflächen 196 mit der Keilfläche 170 der Nutwand 168 zusammenwirken, um das Lagerteil 26 zwischen den Abstützkörpern 42 und 62 einzuspannen und zu fixieren.

## Patentansprüche

1. Anhängekupplung, umfassend einen zwischen einer Arbeitsstellung (A) und einer Ruhestellung (R) bewegbaren Kugelhals (10) mit einem an einem ersten Ende (12) angeordneten Schwenklagerkörper (14) und einer an einem zweiten Ende (16) angeordneten Kupplungskugel (18), eine mittels eines an einer Fahrzeugkarosserie (F) befestigbaren Trägers (24) fahrzeugfest angeordnete Schwenklagereinheit (20) mit einem Schwenklagergehäuse (40), mittels welcher der Schwenklagerkörper (14) um eine Schwenkachse (22) zwischen der Arbeitsstellung (A) und der Ruhestellung (R) verschwenkbar gelagert ist, und eine Drehblockiereinrichtung (90), welche in mindestens einer Drehblockierstellung eine Schwenkbewegung des Schwenklagerkörpers (14) um die Schwenkachse (22) relativ zur Schwenklagereinheit (20) blockiert und in einer Lösestellung freigibt, wobei das Schwenklagergehäuse (40) eine Aufnahme (52) eines Lagerteils (26) des Trägers (24) durchsetzt und dabei durch Formschlusselemente (56, 72) drehfest gehalten ist, wobei das Schwenklagergehäuse (40) durch an dem Lagerteil (26) anliegende und sich am Schwenklagergehäuse (40) sowie am Lagerteil (26) abstützende Abstützkörper (42, 62) fixiert ist,
wobei das Schwenklagergehäuse (40) einen die Aufnahme (52) des Lagerteils (26) durchsetzenden Fortsatz (54) aufweist und wobei sich die Abstützkörper (42, 62) beiderseits der Aufnahme (52) an dem Lagerteil (26) abstützen, wobei einer der Abstützkörper (62', 62", 62"') relativ zu dem Schwenklagergehäuse (40) verstellbar ist, dass der Abstützkörper (62', 62", 62"') relativ zu einer Halteaufnahme (58') durch zumindest ein am Abstützkörper (62', 62", 62"') angeordnetes Stützelement (190, 190', 190") sowie zumindest ein mit diesem Stützelement (190, 190', 190") zusammenwirkendes und an der Halteaufnahme (58') angeordnetes Stützelement (168) verstellbar ist, von denen mindestens eines eine in axialer Richtung des Fortsatzes (54) variierende Stützfläche (170, 196) aufweist, und **dadurch gekennzeichnet, dass** der Abstützkörper (62', 62", 62"') relativ zur Halteaufnahme (58') durch zumindest ein am Abstützkörper (62', 62", 62"') angeordnetes Stützelement (190) sowie zumindest ein mit diesem Stützelement (190, 190', 190") zusammenwirkendes und an der Halteaufnahme (58') angeordnetes Stützelement (168) verstellbar ist, von denen mindestens eines eine in radialer Richtung des Fortsatzes (54) variierende Stützfläche (170, 196) aufweist.

2. Anhängekupplung nach Anspruch 1, **dadurch gekennzeichnet, dass** die Abstützkörper (42, 62) sich mit Abstützflächen (86, 88; 86, 192) außerhalb der Aufnahme (52) an dem Lagerteil (26) abstützen, dass insbesondere das Lagerteil (26) zwischen den Abstützkörpern (42, 62) eingespannt ist, dass insbesondere mindestens die Abstützfläche (86, 88, 86, 192) mindestens eines der Abstützkörper (62, 42) relativ zu dem Schwenklagergehäuse (40) in Richtung des anderen Abstützkörpers (42, 62) durch ein Verspannen bewirkende Elemente (82, 84, 168, 196) bewegbar ist.

3. Anhängekupplung nach einem der voranstehenden Ansprüche, **dadurch gekennzeichnet, dass** die Aufnahme (52) des Lagerteils (26) durch einen Durchbruch desselben gebildet ist.

4. Anhängekupplung nach einem der voranstehenden Ansprüche, **dadurch gekennzeichnet, dass** die Formschlusselemente (56, 72) von einer Kreiskontur abweichenden komplementäre Konturen (56, 72) aufweisen.

5. Anhängekupplung nach einem der voranstehenden Ansprüche, **dadurch gekennzeichnet, dass** der Durchbruch (52) des Lagerteils (26) eine radial zur Schwenkachse (22) variierende Innenkontur (72) aufweist und dass der Fortsatz (54) eine radial zur Schwenkachse (22) variierende Außenkontur (56) aufweist.

6. Anhängekupplung nach Anspruch 5, **dadurch gekennzeichnet, dass** die radial variierende Innenkontur (72) des Durchbruchs (52) mit der radial variierenden Außenkontur (56) des Fortsatzes (54) korrespondierend ausgebildet ist.

7. Anhängekupplung nach einem der voranstehenden Ansprüche, **dadurch gekennzeichnet, dass** einer der sich am Schwenklagergehäuse (40) sowie am Lagerteil (26) abstützenden Abstützkörper (42) am Schwenklagergehäuse (40) feststehend angeordnet ist, dass insbesondere der Abstützkörper (42) einstückig an das Schwenklagergehäuse (40) angeformt ist.

8. Anhängekupplung nach einem der voranstehenden Ansprüche, **dadurch gekennzeichnet, dass** der Abstützkörper (62) an einer Halteaufnahme (58') des Fortsatzes (54) gehalten ist und durch eine Relativbewegung zur Halteaufnahme (58') relativ zum Schwenklagergehäuse (40) verstellbar ist.

9. Anhängekupplung nach einem der voranstehenden Ansprüche, **dadurch gekennzeichnet, , dass** eines der Stützelemente (168) eine an der Halteaufnahme (58') ausgebildete Keilfläche (170) und/oder das andere der Stützelemente (190) einen radial zum Fortsatz (54) bewegbaren Keilkörper (190) mit einer Keilfläche (196) aufweist.

10. Anhängekupplung nach Anspruch 9, **dadurch gekennzeichnet, dass** die Halteaufnahme (58') als Nut (162) ausgebildet ist, und dass insbesondere eine Nutwand (168) die Keilfläche (170) bildet.

11. Anhängekupplung nach Anspruch 9 oder 10, **dadurch gekennzeichnet, dass** an dem Abstützkörper (62) mehrere Stützelemente (190, 190', 190") vorgesehen sind.

12. Anhängekupplung nach Anspruch 11, **dadurch gekennzeichnet, dass** die mehreren Stützelemente (190, 190', 190") durch zwei Ringsegmente (182, 184) eines Halterings (62') gebildet sind, die durch Spannvorrichtungen (202) miteinander verspannbar sind.

13. Anhängekupplung nach einem der voranstehenden Ansprüche, **dadurch gekennzeichnet, dass** mindestens drei als Segmente, insbesondere als Bogensegmente, ausgebildete Stützelemente (190', 190") vorgesehen sind, die durch einen Stützelemententräger (212, 238) beaufschlagt sind, dass insbesondere der Stützelemententräger (212, 238) eine Beaufschlagung der Stützelemente (190') in Richtung der Halteaufnahme (58') bewirkt, dass insbesondere der Stützelemententräger (212, 238) C-förmig ausgebildet ist und dass dessen Enden (242, 244) durch ein Spannelement (214, 246) aufeinanderzu bewegt sind.

## Claims

1. A trailer coupling, comprising a ball neck (10) movable between a working position (A) and a rest position (R) with a pivotal bearing body (14) arranged at a first end (12) and a coupling ball (18) arranged at a second end (16), a pivotal bearing unit (20) arranged fixed to a vehicle by means of a carrier (24) fixed to a vehicle body (F) with a pivotal bearing housing (40), the pivotal bearing body (14) being pivotally mounted by means of the pivotal bearing unit about a pivotal axis (22) between the working position (A) and the rest position (R), and a rotation-blocking device (90), which in at least one blocking position blocks a pivotal movement of the pivotal bearing body (14) about the pivotal axis (22) relative to the pivotal bearing unit (20) and in a release position releases it, wherein the pivotal bearing housing (40) passes through a receiving means (52) of a bearing part (26) of the carrier (24) and is thus held against rotation by positively-locking elements (56, 72), wherein the pivotal bearing housing (40) is fixed by support bodies (42, 62) adjacent to the bearing part (26) and supported on the pivotal bearing housing (40) and on the bearing part (26),
wherein the pivotal bearing housing (40) has a projection (54) passing through the receiving means (52) of the bearing part (26) and wherein the support bodies (42, 62) are supported on the bearing part (26) at both sides of the receiving means (52),
wherein one of the support bodies (62', 62", 62"') is adjustable relative to the pivotal bearing housing (40), in that the support body (62', 62", 62"') is adjustable relative to a retaining receiving means (58') by at least one support element (190, 190', 190") arranged on the support body (62', 62", 62"') as well as by at least one support element (168) cooperating with this support element (190, 190', 190") and arranged on the retaining receiving means (58'), of which at least one has a support surface (170, 196) varying in the axial direction of the projection (54), and **characterised in that** the support body (62', 62", 62‴) is adjustable relative to the holding receiving means (58') by at least one support element (190) arranged on the support body (62', 62", 62"') as well as by a support element (168) cooperating with this support element (190, 190', 190") and arranged on the holding receiving means (58'), of which at least one has a support surface (170, 196) varying in the radial direction of the projection (54).

2. A trailer coupling according to claim 1, **characterised in that** the support bodies (42, 62) are supported with support surfaces (86, 88; 86, 192) outside the receiving means (52) on the support part (26), **in that** in particular the support part (26) is clamped between the support bodies (42, 62), **in that** in particular at least the support surface (86, 88, 86, 192) of at least one of the support bodies (62, 42) is movable relative to the pivotal bearing housing (40) in the direction of the other support body (42, 62) by means of elements (82, 84, 168, 196) producing a clamping effect.

3. A trailer coupling according to any one of the preceding claims, **characterised in that** the receiving means (52) of the bearing part (26) is formed by a through opening thereof.

4. A trailer coupling according to any one of the preceding claims, **characterised in that** the positively-locking elements (56, 72) have complementary contours (56, 72) differing from a circular contour.

5. A trailer coupling according to any one of the preceding claims, **characterised in that** the through opening (52) of the bearing part (26) has an inner contour (72) varying radially to the pivotal axis (22) and **in that** the projection (54) has a varying outer contour (56) radially to the pivotal axis (22).

6. A trailer coupling according to claim 5, **characterised in that** the radially varying inner contour (72) of the through opening (52) is formed in corresponding manner to the radially varying outer contour (56) of the projection (54).

7. A trailer coupling according to any one of the preceding claims, **characterised in that** one of the support bodies (42) supported on the pivotal bearing housing (40) and on the bearing part (26) is arranged fixedly on the pivotal bearing housing (40), **in that** in particular the support body (42) is formed in one piece on the pivotal bearing housing (40).

8. A trailer coupling according to any one of the preceding claims, **characterised in that** the support body (62) is held on a retaining receiving means (58') of the projection (54) and is adjustable by a relative movement to the retaining receiving means (58') relative to the pivotal bearing housing (40).

9. A trailer coupling according to any one of the preceding claims, **characterised in that** one of the support elements (168) has a cam surface (170) formed on the retaining receiving means (58') and/or the other of the support elements (190) has a cam body (190) which is movable radially to the projection (54) and has a cam surface (196).

10. A trailer coupling according to claim 9, **characterised in that** the retaining receiving means (58') is formed as a groove (162), and **in that** in particular a groove wall (168) forms the cam surface (170).

11. A trailer coupling according to claim 9 or 10, **characterised in that** a plurality of support elements (190, 190', 190") are provided on the support body (62).

12. A trailer coupling according to claim 11, **characterised in that** the plurality of support elements (190, 190', 190") are formed by two ring segments (182, 184) of a retaining ring (62'), which are clampable together by clamping devices (202).

13. A trailer coupling according to any one of the preceding claims, **characterised in that** there are provided at least three support elements (190', 190") formed as segments, in particular as arcuate segments, which are acted upon by a support element carrier (212, 238), **in that** in particular the support element carrier (212, 238) acts upon the support elements (190') in the direction of the retaining receiving means (58'), **in that** in particular the support element carrier (212, 238) is formed in C-shape and **in that** its ends (242, 244) are moved towards each other by a clamping element (214, 246).

## Revendications

1. Attelage de remorque, comprenant une rotule (10) mobile entre une position de travail (A) et une position de repos (R), avec un corps de palier pivotant (14) disposé sur une première extrémité (12) et une boule d'attelage (18) disposée sur une deuxième extrémité (16), une unité de palier pivotant (20) disposée de manière solidaire sur le véhicule au moyen d'un support (24) pouvant être fixé sur une carrosserie de véhicule (F), avec un boîtier de palier pivotant (40), permettant au corps de palier pivotant (14) d'être monté de manière pivotante autour d'un axe de pivotement (22) entre la position de travail (A) et la position de repos (R), et un dispositif de blocage de rotation (90) qui, dans au moins une position de blocage de rotation, bloque un mouvement de pivotement du corps de palier pivotant (14) autour de l'axe de pivotement (22) par rapport à l'unité de palier pivotant (20) et le libère dans une position de déblocage, dans lequel le boîtier de palier pivotant (40) traverse un logement (52) d'une pièce de palier (26) du support (24) et est maintenu de manière solidaire en rotation par des éléments à complémentarité de forme (56, 72), dans lequel le boîtier de palier pivotant (40) est fixé par des corps d'appui (42, 62) reposant sur la pièce de palier (26) et prenant appui à la fois sur le boîtier de palier pivotant (40) et sur la pièce de palier (26), dans lequel le boîtier de palier pivotant (40) présente un prolongement (54) traversant le logement (52) de la pièce de palier (26) et dans lequel les corps d'appui (42, 62) prennent appui des deux côtés du logement (52) sur la pièce de palier (26), dans lequel un des corps d'appui (62', 62", 62‴) peut être ajusté par rapport au boîtier de palier pivotant (40), le corps d'appui (62, 62'', 62‴) peut être ajusté par rapport à un logement de maintien (58') par au moins un élément de support (190, 190', 190") disposé sur le corps d'appui (62', 62'', 62‴) et au moins un élément de support (168) coopérant avec ledit élément de support (190, 190', 190") et disposé sur le logement de maintien (58') dont au moins un présente une surface d'appui (170, 196) variant dans la direction axiale du prolongement (54), et **caractérisé en ce que** le corps d'appui (62', 62", 62‴) peut être ajusté par rapport au logement de maintien (58') par au moins un élément de support (190) disposé sur le corps d' appui (62', 62", 62‴) et au moins un élément de support (168) coopérant avec ledit élément d'appui (190, 190', 190") et disposé sur le logement de maintien (58'), dont au moins un présente une surface d'appui (170, 196) variant dans la direction radiale du prolongement (54).

2. Attelage de remorque selon la revendication 1, **caractérisé en ce que** les corps d'appui (42, 62) prennent appui avec des surfaces d'appui (86, 88 ; 86, 192) à l'extérieur du logement (52) sur la pièce de palier (26), qu'en particulier la pièce de palier (26) est enserrée entre les corps d'appui (42, 62), et qu'en particulier au moins la surface d'appui (86, 88, 86, 192) d'au moins un des corps d'appui (62, 42) peut être déplacée par rapport au boîtier de palier pivotant (40) en direction de l'autre corps d'appui (42, 62) par des éléments (82, 84, 168, 196) provoquant un assemblage par serrage.

3. Attelage de remorque selon l'une quelconque des revendications précédentes, **caractérisé en ce que** le logement (52) de la pièce de palier (26) est formé par un percement de celle-ci.

4. Attelage de remorque selon l'une quelconque des revendications précédentes, **caractérisé en ce que** les éléments à complémentarité de forme (56, 72) présentent des contours complémentaires (56, 72) qui diffèrent d'un contour circulaire.

5. Attelage de remorque selon l'une quelconque des revendications précédentes, **caractérisé en ce que** le percement (52) de la pièce de palier (26) présente un contour intérieur (72) variant radialement par rapport à l'axe de pivotement (22) et que le prolongement (54) présente un contour extérieur (56) variant radialement par rapport à l'axe de pivotement (22).

6. Attelage de remorque selon la revendication 5, **caractérisé en ce que** le contour intérieur (72) variant radialement du percement (52) est réalisé de manière à correspondre au contour extérieur (56) variant radialement du prolongement (54).

7. Attelage de remorque selon l'une quelconque des revendications précédentes, **caractérisé en ce qu'**un des corps d'appui (42) prenant appui sur le boîtier de palier pivotant (40) ainsi que sur la pièce de palier (26) est disposé de manière fixe sur le boîtier de palier pivotant (40), qu'en particulier le corps d'appui (42) est formé d'une seule pièce sur le boîtier de palier pivotant (40).

8. Attelage de remorque selon l'une quelconque des revendications précédentes, **caractérisé en ce que** le corps d'appui (62) est maintenu sur un logement de maintien (58') du prolongement (54) et peut être ajusté par un mouvement relatif par rapport au logement de maintien (58') par rapport au boîtier de palier pivotant (40).

9. Attelage de remorque selon l'une quelconque des revendications précédentes, **caractérisé en ce qu'**un des éléments de support (168) présente une surface en coin (170) réalisée sur le logement de maintien (58') et/ou l'autre des éléments de support (190) présente un corps en coin (190) pouvant être déplacé radialement par rapport au prolongement (54) avec une surface en coin (196).

10. Attelage de remorque selon la revendication 9, **caractérisé en ce que** le logement de maintien (58') est réalisé sous forme de rainure (162), et qu'en particulier une paroi de rainure (168) forme la surface en coin (170).

11. Attelage de remorque selon la revendication 9 ou 10, **caractérisé en ce que** plusieurs éléments de support (190, 190', 190") sont prévus sur le corps d'appui (62).

12. Attelage de remorque selon la revendication 11, **caractérisé en ce que** les plusieurs éléments de support (190, 190', 190") sont formés par deux segments annulaires (182, 184) d'un anneau de maintien (62') qui peuvent être assemblés par serrage entre eux par des dispositifs de serrage (202).

13. Attelage de remorque selon l'une quelconque des revendications précédentes, **caractérisé en ce que** sont prévus au moins trois éléments de support (190', 190") réalisés sous forme de segments, en particulier de segments courbes, qui sont soumis à une action par un support d'éléments de support (212, 238), qu'en particulier le support d'éléments de support (212, 238) provoque une action sur les éléments de support (190') en direction du logement de maintien (58'), qu'en particulier le support d'éléments de support (212, 238) est réalisé en forme de C et que ses extrémités (242, 244) sont à déplacer l'une vers l'autre par un élément de serrage (214, 246).
